# EUROPÄISCHE PATENTSCHRIFT

(11) **EP 0 581 037 B1**
(45) Veröffentlichungstag und Bekanntmachung des Hinweises auf die Patenterteilung: **07.01.1998**
(21) Anmeldenummer: 93110443.4
(22) Anmeldetag: 30.06.1993
(51) Int. Cl.: A61C 1/08

(54) **Ärztliches oder zahnärztliches Behandlungsinstrument mit einem angetriebenen Behandlungswerkzeug**
Medical or dental treatment instrument comprising a driven treatment tool
Instrument de traitement médical ou dentaire comportant un outil de traitement entraîné

(30) Priorität: 30.06.1992 DE 4221403
(43) Veröffentlichungstag der Anmeldung: 02.02.1994
(73) Patentinhaber: KALTENBACH & VOIGT GMBH & CO., 88400 Biberach (DE)
(72) Erfinder: Kuhn, Bernhard, D-7957 Schemmerhofen 1 (DE)
(74) Vertreter: Schmidt-Evers, Jürgen, Dipl.-Ing.

(56) Entgegenhaltungen:
- EP-A- 0 281 847
- FR-A- 2 444 456
- FR-A- 2 510 392
- GB-A- 2 118 836

## Beschreibung

Die Erfindung betrifft ein Behandlungsinstrument nach dem Oberbegriff des Anspruchs 1.

Bei ärztlichen und insbesondere zahnärztlichen Behandlungsinstrumenten ist oft eine schnelle Bewegung, insbesondere eine hohe Drehzahl, des Behandlungswerkzeugs erwünscht. Bei zahnärztlichen Handstücken sind z.B. 30 000 und mehr Umdrehungen pro Minute für den Bohrer üblich. Solche hohen Werkzeug-geschwindigkeiten lassen sich durch Elektro- oder Luftmotoren erreichen. Es gibt jedoch auch Behandlungsarten, insbesondere in der Chirurgie, bei denen das Behandlungswerkzeug geringe Bewegungsgeschwindigkeiten ausführen soll. Um für solche Behandlungsinstrumente ein und denselben, nämlich den hochtourigen Antrieb benutzen zu können, ist man, insbesondere bei zahn- oder kieferchirurgischen Behandlungen, dazu übergegangen, gemäß DE-OS 28 10 044 einem zahnärztlichen Handstück mehrere Lagerhülsen mit Getrieben unterschiedlicher Übersetzungen als bauliche Einheiten zuzuordnen, die wahlweise vom antriebsseitigen Ende her in die Axialöffnung einer Griffhülse einschiebbar sind. Zur axialen Fixierung der jeweiligen Lagerhülse dient eine Verschraubung mit einem Außengewinde am vorderen Ende der Lagerhülse und einem Innengewinde in der Griffhülse. Zum Ein- und Ausschrauben dient ein spezielles Schraubwerkzeug, das von hinten in die Griffhülse einführbar ist und mittels Drehelementen formschlüssig am rückseitigen Ende der Lagerhülse anzugreifen vermag. Die Getriebe weisen unterschiedliche Übersetzungsverhältnisse auf, und durch den wahlweisen Einbau eines bestimmten Getriebes lassen sich unterschiedliche Übersetzungsverhältnisse verwirklichen. Das Lagerhülse der jeweiligen Baueinheit besteht aus einem Hinterteil und einem Vorderteil, die hülsenförmig aufeinandergeschraubt sind. Bei dieser bekannten Ausgestaltung bedarf es nicht nur eines besonderen manuellen Geschicks, um die jeweilige Baueinheit ein- oder auszubauen, sondern es bedarf auch einer besonderen Sicherung zwischen den Lagerhülsenteilen, insbesondere unter Berücksichtigung der Tatsache, daß beim Ein- oder Ausschrauben ein Drehmoment auf diese Teile ausgeübt wird. Es ist somit die rückseitige Abdeckung und Sicherung des jeweiligen Getriebegehäuses nicht nur bauaufwendig sondern auch handhabungsaufwendig.

Die vorbeschriebenen Nachteile gelten auch bei einem Behandlungsinstrument der eingangs angegebenen Art, das in der EP-A-0 281 847 beschrieben ist. Bei dieser bekannten Ausgestaltung bildet eine Eingangswelle mit einem Getriebe in einer Lagerhülse eine modulare Einheit, die von hinten in das Handstück einschiebbar ist. Desweiteren ist eine Innenhülse von hinten in das Handstück und auf die modulare Einheit schiebbar, wobei die Innenhülse an ihrem hinteren Ende einen Gewindeflansch aufweist, der auf das hintere Ende des Handstücks schraubbar ist.

Der Erfindung liegt die Aufgabe zugrunde ein Behandlungsinstrument der eingangs angegebenen Art so auszugestalten, daß das Getriebe in einfacher Weise montagefreundlich im Handstück angeordnet werden kann.

Diese Aufgabe wird durch die Merkmale des Anspruchs 1 gelöst.

Bei der erfindungsgemäßen Ausgestaltung ist eine in der im wesentlichen zylindrischen Bohrung der Griffhülse eines Handstücks von hinten einschiebbare Innenhülse vorgesehen, deren hinteres Ende mit dem hinteren Ende der Griffhülse verschraubbar ist, und deren vorderes Ende mit dem hinteren Ende der zugehörigen Lagerhülse lösbar verbindbar ist. Hierdurch läßt sich in einfacher und montagefreundlicher Weise die Lagerhülse axial positionieren und insbesondere gegen eine vordere Schulterfläche der Griffhülse spannen, wobei aufgrund der Verbindung zwischen der Innenhülse und der Lagerhülse letzteres nicht nur mittels der Innenhülse aus der Griffhülse entnommen werden kann, sondern auch im ausgebauten Zustand an die Innenhülse angebaut werden kann, so daß die Innenhülse mit der Lagerhülse in die Griffhülse eingeschoben und wieder herausgezogen werden können. Aufgrund des leichten Ein- und Ausbaus läßt sich die Griffhülse und gegebenenfalls auch das Getriebe im ausgebauten Zustand außen- und innenseitig leicht, handhabungsfreundlich und schnell reinigen und pflegen und insbesondere sicher desinfizieren, was insbesondere bei einem chirurgischen Einsatz des Behandlungsinstruments von Bedeutung ist.

Ein anderer Vorteil der erfindungsgemäßen Lösung besteht darin, daß die Anordnung der Innenhülse es auf einfache Weise ermöglicht, mehrere Getriebe mit unterschiedlichen Über- oder Untersetzungsverhältnissen wahlweise zu montieren und sicher in der Griffhülse zu positionieren bzw. zu fixieren. Aufgrund der axialen Beweglichkeit der Innenhülse können, jedoch müssen nicht, die jeweiligen Lagerhülsen von gleicher Baulänge sein, sondern sie können auch eine unterschiedliche Baulänge aufweisen, was sich durch die Innenhülse in einfacher Weise ausgleichen läßt.

Die lösbare Verbindung zwischen der Innenhülse und der Lagerhülse ist vorzugsweise eine Verschraubung mit Innen- und Außengewinde an den zugehörigen Teilen. Hierdurch wird nicht nur eine sichere Verbindung gewährleistet, sondern es sich auch möglich, eine axiale Spannung auf Einzelteile in der Lagerhülse auszuüben und diese dadurch zu fixieren. Ein weiterer Vorteil besteht darin, daß das wenigstens eine axial zu fixierende Teil auch im ausgebauten Zustand der Lagerhülse fixiert bzw. axial gespannt werden kann und zwar durch Anziehen der Verschraubung zwischen der Innenhülse und der Lagerhülse. Eine so vormontierte Baueinheit mit Innenhülse kann dann in einfacher Weise in die Griffhülse eingeschoben und am antriebsseitigen Ende verschraubt werden.

In den Unteransprüchen sind Merkmale enthalten, die zur Problemlösung beitragen und außerdem vorteilhafte Merkmale zum lösbaren und handhabungsfreundlichen Ankuppeln der Griffhülse an ein Antriebsteil vorgeben.

Der Anspruch 7 bezieht sich auf eine einfache lösbare Befestigung eines festen Zahnrades eines in die Lagerhülse integrierten Getriebes.

Im Anspruch 18 ist eine axial wirksame, lösbare Halterung zwischen der Innenhülse und einem sie übergreifenden Schraubring enthalten.

Nachfolgend werden die Erfindung und weitere durch sie erzielbare Vorteile anhand von bevorzugten Ausführungsbeispielen und einer Zeichnung näher erläutert. Es zeigt
- Fig. 1: ein erfindungsgemäßes zahnärztliches Handstück mit einem Getriebe großer Untersetzung im vertikalen Längsschnitt;
- Fig. 2: das Getriebe in vergrößerter Darstellung;
- Fig. 3: ein erfindungsgemäßes zahnärztliches Handstück mit einem Getriebe kleiner Untersetzung im vertikalen Längsschnitt;
- Fig. 4: ein erfindungsgemäßes zahnärztliches Handstück mit einer Lagerhülse im vertikalen Längsschnitt;
- Fig. 5: die in Fig. 1 mit X gekennzeichnete Einzelheit in vergrößerter Darstellung.

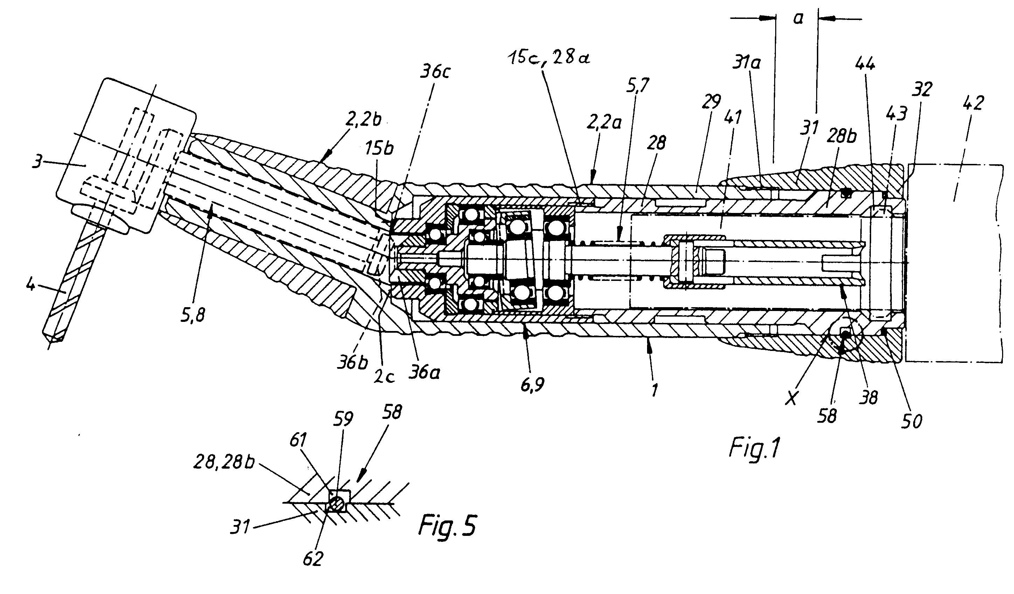

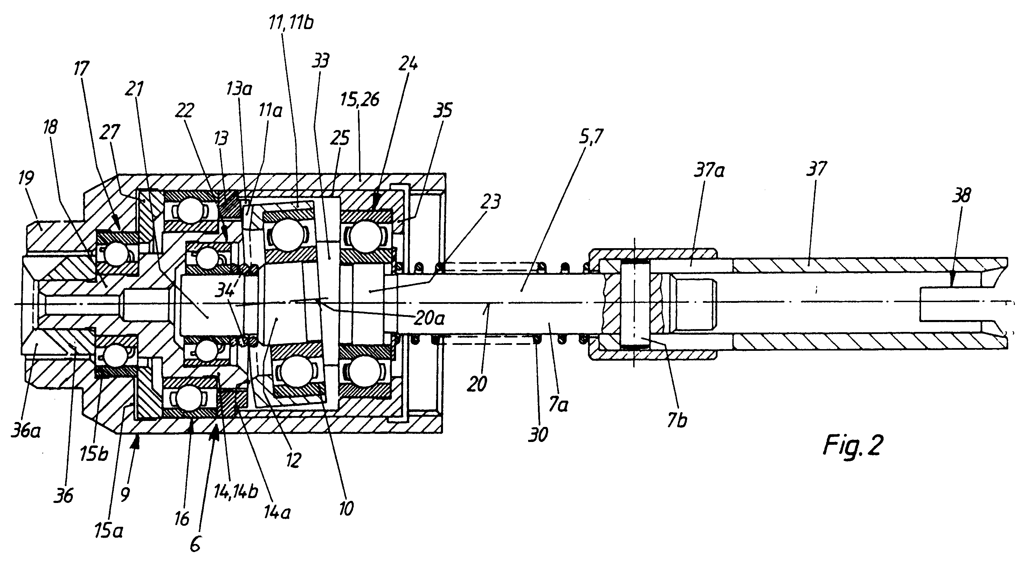

Das Handstück 1 besteht gemäß Fig. 1 bis 3 aus einer Griffhülse 2, einem an deren vorderen Ende befestigten oder befestigbaren, insbesondere darin einsteckbaren Kopfstück 3, einem vorzugsweise seitlich vom Kopfstück 2 abstehenden Bohrer 4, der im Kopfstück 3 drehbar gelagert ist, und einem Antriebswellenzug 5, der mit einem Getriebe 6 in der Griffhülse 2 gelagert ist.

Bei den vorliegenden Ausgestaltungen ist das Handstück ein sog. Winkelstück, d.h. die Griffhülse 2 weist einen hinteren und einen vorderen angedeuteten Griffhülsenabschnitt 2a, 2b auf, von denen der vordere Griffhülsenabschnitt 2b gegenüber dem hinteren etwas abgeknickt angeordnet ist, und die einteilig miteinander verbunden sind.

Der Antriebswellenzug 5 besteht aus einem hinteren und einem vorderen Antriebswellenabschnitt 7, 8, zwischen denen das Getriebe 6 angeordnet ist. Das Getriebe 6 bildet eine austauschbare Baueinheit 9. Deren Hauptteile sind ein Eingangszahnrad 11, das mittels eines Wälzlagers 10 auf einen schrägen Wellenabschnitt 12 im vorderen Endbereich des hinteren Antriebswellenabschnitts 7 frei drehbar gelagert ist, ein in der im wesentlichen zylindrischen Bohrung der Griffhülse 2 fest angeordneter Zahnkranz 13, ein Ausgangszahnrad 14 und ein Getriebegehäuse bzw. eine Lagerhülse 15, in dem die vorgenannten Teile mittels mehreren Lagern, insbesondere Wälzlagern, drehbar gelagert sind. Der hintere Antriebswellenabschnitt 7, der feste Zahnkranz 13 und das Ausgangszahnrad 14 sind koaxial zueinander angeordnet. Der feste Zahnkranz 13 und das Ausgangszahnrad 14 weisen antriebsseitig jeweils eine Seitenzahnung 13a, 14a auf, die jeweils mit einer Seitenzahnung auf der Werkzeugseite des Eingangszahnrads 11 kämmen. Vorzugsweise weist das Eingangszahnrad 11 eine für beide Seitenzahnungen 13a, 14a gemeinsame Seitenzahnung 11a auf, wobei die Seitenzahnung 14a des Ausgangszahnrads 14 koaxial innerhalb der Seitenzahnung 13a des festen Zahnkranzes 13 angeordnet ist, so daß letztere mit dem äußeren Bereich und erstere mit dem inneren Bereich der Seitenzahnung 11a des Eingangszahnrads 11 kämmen. Der feste Zahnkranz 13 befindet sich deshalb vorzugsweise in der gleichen Querrichtung wie der Zahnkranz 14b des Ausgangszahnrads 14, der die zugehörige Seitenzahnung 14a trägt.

Die Seitenzahnung 14a des Ausgangszahnrades 14 ist an einem hohlzylindrischen Ringabschnitt 14b angeordnet, auf dessen Außenmantelfläche ein erstes Wälzlager 16 sitzt, mit dem das Ausgangszahnrad 14 an der Innenmantelfläche des topfförmigen Getriebegehäuses 15 drehbar gelagert ist. Ein zweites Wälzlager 17 sitzt in einem zum Werkzeug 4 gerichteten Abstand vom ersten Wälzlager 16 auf einem werkzeugseitigen koaxialen Lagerzapfen 18 des Ausgangszahnrads 14, und es ist in einem stirnseitigen Lagerring 19 des Getriebegehäuses 15 gelagert.

Ein werkzeugseitiger koaxialer Endlagerzapfen 21 des hinteren Antriebswellenabschnitts 7 ist mittels eines auf ihm sitzenden Wälzlagers 22 an der Innenmantelfläche des hohlzylindrischen Ringes 14b des Ausgangszahnrads 14 gelagert. Antriebsseitig vom Eingangszahnrad 11 weist der hintere Antriebswellenabschnitt 7 einen zweiten Lagerabschnitt 23 auf, auf dem ein Wälzlager 24 sitzt, mit dem er in einer hohlzylindrischen Innenbuchse 25 gelagert ist, die schließend in die hohlzylindrische Umfangswand 26 des Getriebegehäuses 15 von der Antriebsseite her eingeschoben ist. Am werkzeugseitigen Ende der Innenbuchse 25 liegt der feste Zahnkranz 13 an. Dabei ist er werkzeugseitig mittels des an ihm anliegenden Außenrings des Wälzlagers 16 und einem davon werkzeugseitig angeordneten Distanzring 27 axial zwischen der werkzeugseitigen Innenschulterfläche 15a des topfförmigen Getriebegehäuses 15 und der Innenbuchse 25 positioniert. Es ist auch möglich, die Anordnung so zu treffen, daß der Außenring des Wälzlagers 17 rückseitig von der Innenschulterfläche 15a geringfügig vorsteht, wobei der Distanzring 27 anstelle an der Innenschulterfläche 15a, von der er in diesem Falle einen kleinen Abstand aufweist, am Außenring des Wälzlagers 17 anliegt, der frontseitig an einer vorderen Innenschulterfläche 15b anliegt.

Die Innenbuchse 25 liegt mit ihrem antriebsseitigen Ende am werkzeugseitigen Ende einer Innenhülse 28 der Griffhülse 2 an, wobei die Innenhülse 28 mit geringem Bewegungsspiel in einer Außenhülse 29 bzw. Griffhülse 2 sitzt und durch einen Schraubring 31 gegen die Innenbuchse 25 geschraubt ist, der mit seinem werkzeugseitigen Endbereich mittels eines Innen- und Außengewindes 31a auf die Außenhülse 29 aufgeschraubt ist und mit einer Innenschulter 32 am antriebsseitigen Ende die Innenhülse 28 hintergreift. Das Außengewinde am vorderen Ende der Innenhülse 28 und das Innengewinde am hinteren Ende des Getriebegehäuses 15 sind mit 28a und 15c bezeichnet. Die vorbeschriebene Ausgestaltung ist aus mehreren Gründen vorteilhaft. Zum einen ist es möglich, die Baueinheit 9 am vorderen Ende der Innenhülse 28 vorzumontieren und in diesem Zustand gemeinsam in die Außen- oder Griffhülse 2 von der Antriebsseite her einzusetzen. Zum anderen erlaubt die Verschraubung mit Außen- und Innengewinde 28a, 15c ein Fixieren des festen Zahnkranzes 13 durch Klemmdruck, der beim Einschrauben der Innenhülse 28 in das Getriebegehäuse 15 erzeugt wird und den festen Zahnkranz 13 zwischen dem Außenring des Wälzlagers 16 und der hohlzylindrischen Innenbuchse 25 festklemmt. Dabei ermöglicht es die Ausgestaltung mit Innenhülse 28 und Übergreif-Schraubring 31, die Baueinheit 9 vorzugsweise mit der Innenhülse 28 gegen eine weitere, nach hinten gerichtete Schulterfläche 2c in der Griffhülse 2 zu drücken bzw. zu verspannen, die eine Bezugsfläche darstellt und sich im Bereich des Knickes der Griffhülse 2 befindet. Bei der vorliegenden Ausgestaltung liegt die vordere Stirnseite des vorzugsweise an diesem Ende im Durchmesser verjüngten Getriebegehäuses 15 an dieser Schulterfläche 2c an. Zwischen dem hinteren Ende der Außenhülse 29 und dem hintergriffenen, im Durchmesser erweiterten hinteren Endabschnitt 28b der Innenhülse 28 ist ein axialer Abstand a vorgesehen, der es ermöglicht, unterschiedliche Baulängen des Getriebes 6 in ein und derselben Außenhülse 29 mit dem Schraubring 31 einzubauen.

Die Seitenverzahnung 11a ist vorderseitig an einem Innenflansch angeordnet, von dem sich eine Lagerbuchse 11b mit Innenschulter nach hinten koaxial zum schrägen Achsabschnitt 20a der Längsmittelachse 20 erstreckt. In der Lagerbuchse 11b mit Innenschulter sitzt der Außenring des Wälzlagers 10.

Zwischen dem das Eingangszahnrad 11 tragenden Wälzlager 10 und dem antriebsseitigen Wälzlager 24 weist der Antriebswellenabschnitt 7 einen Ringbund 33 auf, der aufgrund der schrägen Erstreckung des schrägen Wellenabschnitts 12 eine keilige Form aufweist, und an dessen vorseitigen Schulterfläche der Innenring des Wälzlagers 10 anliegt.

Der hintere Antriebswellenabschnitt 7 ist mittels einer Druckfeder 34 zur Antriebsseite hin axial beaufschlagt, die einerseits an der werkzeugseitigen Schulterfläche des schrägen Wellenabschnitts 12 und andererseits mittels des Wälzlagers 22 gegen das Ausgangszahnrad 14 abgestützt ist. Eine rückseitige Bewegung des hinteren Antriebswellenabschnitt 7 ist durch einen Innenflansch 35 der Innenbuchse 25 begrenzt, der den Außenring des Wälzlagers 24 hintergreift.

Das werkzeugseitige Ende des Ausgangszahnrads 14 bzw. dessen Lagerzapfen 18 ist als Kegelrad mit einer endseitigen Kegelverzahnung 36a ausgebildet, die mit einer Kegelverzahnung 36b des vorderen Antriebswellenabschnitt 8 kämmt, und somit ein Winkelgetriebe 36c bildet, wobei der Antriebswellenabschnitt 8 das Ausgangszahnrad 14 mit einer den Bohrer 4 spannenden Lagerhülse antriebsmäßig verbindet, vorzugsweise ebenfalls mit einem andeutungsweise dargestellten Winkelgetriebe.

Die vorbeschriebene Ausgestaltung ermöglicht somit nicht nur eine präzise Halterung der Getriebe-Baueinheit 9, sondern sie ermöglicht auch eine handhabungsfreundliche Demontage der Baueinheit 9 und zwar sowohl als Einheit als auch bezüglich der Einzelteile, insbesondere Verschleißteile des Getriebes. Durch Ausschrauben der Innenhülse 28 aus dem Getriebegehäuse 15 ist dieses durch Herausziehen der Innenbuchse 25 zugänglich, um seine Einzelteile z.B. zwecks Veränderung des Übersetzungsverhältnisses und/oder die einem Verschleiß unterliegen, wahlweise auszutauschen, wie die Zahnkränze bzw. Zahnräder, insbesondere der feste Zahnkranz 13, als auch die Wälzlager. Außerdem ermöglicht es die vorbeschriebene Ausgestaltung, die Griffhülse 2 innen und außen präzise zu desinfizieren und auch das Getriebe 6 insbesondere als ausgebaute Einheit oder auch zerlegt sicher zu desinfizieren, was insbesondere bei der Benutzung für chirurgische Eingriffe von Bedeutung ist.

Der hintere Antriebswellenabschnitt 7 weist an seinem antriebsseitigen Ende eine darauf axial verschiebbar gelagerte Kupplungshülse 37 auf, die axial verschiebbar auf dem rückseitigen Wellenteil 7a des Antriebswellenabschnitts 7 verschiebbar gelagert ist, wobei ein Querbolzen 7b im Wellenteil 7a die Kupplungshülse 37 in Langlöchern 37a radial durchfaßt und die mittels einer sich am Innenring des Wälzlagers 24 abstützenden Druckfeder 30 zur Antriebsseite hin in ihre axiale Endstellung beaufschlagt ist.

Die Griffhülse 2 ist mit der Innenbohrung 28c der Innenhülse 28 auf einen nur andeutungsweise dargestellten runden Steckzapfen 41 eines sog. Antriebsteils 42 des Handstücks 1 aufsteckbar, wobei am Steckzapfen 41 ein überdrückbares Rastelement 43 angeordnet ist, das in der aufgesteckten Stellung in eine Ringnut 44 in der Bohrung 28c einrastet und dadurch die Griffhülse 2 axial fixiert. Bei diesem Rastelement 43 kann es sich um einen an sich bekannten Rastring oder auch um wenigstens eine Kugel handeln, die radial verschiebbar und durch eine Feder radial auswärts in eine Endstellung beaufschlagt sind, in der sie die Mantelfläche des Steckzapfens 41 überragen und somit in die Ringnut 44 elastisch einrasten können.

Die Kupplungshülse 37 ist mit einem formschlüssig wirksamen Drehelement 38, hier ein Aufsteckschlitz, in Antriebsverbindung mit einem Motor oder einem weiteren Wellenabschnitt des Antriebsteils steckbar.

Das Zähnezahlverhältnis wenigstens eines Paars der miteinander kämmenden Seitenzahnungen 11a, 13a oder 11a, 14a ist um wenigstens einen Zahn unterschiedlich. Bei der vorliegenden Ausgestaltung sind folgende Zähnezahlen realisiert:
Antriebszahnrad 11 = 31 Zähne
fester Zahnkranz 13 = 30 Zähne
Ausgangszahnrad 14 = 31 Zähne

Bei der erfindungsgemäßen Ausgestaltung steht nur einer der beiden einander gegenüberliegenden Taumelabschnitte des Eingangszahnrades 11 zugleich mit dem festen Zahnkranz 13 und dem Ausgangszahnrad 14 in Zahneingriff. Deshalb wird nicht nur die Längsabmessung des festen Zahnkranzes 13 sondern auch das Taumelmaß eingespart.

Die Flanken der vorhandenen Zähne sind schräg gerichtet.

Bei der erfindungsgemäßen Ausgestaltung gemäß Fig. 1 eignet sich das Handstück 1, insbesondere für den chirurgischen Einsatz, z.B. zum Schneiden, Schneidbohren, Fräsen, Gewindeschneiden und dgl. mehr.

In das Handstück 1 bzw. in die Griffhülse 2 sind vorzugsweise mehrere Getriebe 6 jeweils als eine Baueinheit 9a, 9b wahlweise ein- und ausbaubar, die mit der Griffhülse eine Garnitur bilden können oder zum allgemeinen Behandlungssortiment des Zahnarztes gehören können. Hierdurch ist es möglich, ein und dasselbe Handstück 1 bzw. Griffhülse 2 für verschiedene Behandlungsarten, wie Bohren, Schleifen, Polieren, Fräsen, Sägen, Feilen und Schrauben einzurichten, wobei es sich um Zahnbehandlungen oder auch chirurgische Behandlungen, z.B. in der Kieferchirurgie, handeln kann.

Ein entsprechendes Behandlungswerkzeug 4 ist zur Verfügung zu stellen und in der vorhandenen Werkzeughalterung des Kopfstückes 3 aufzunehmen.

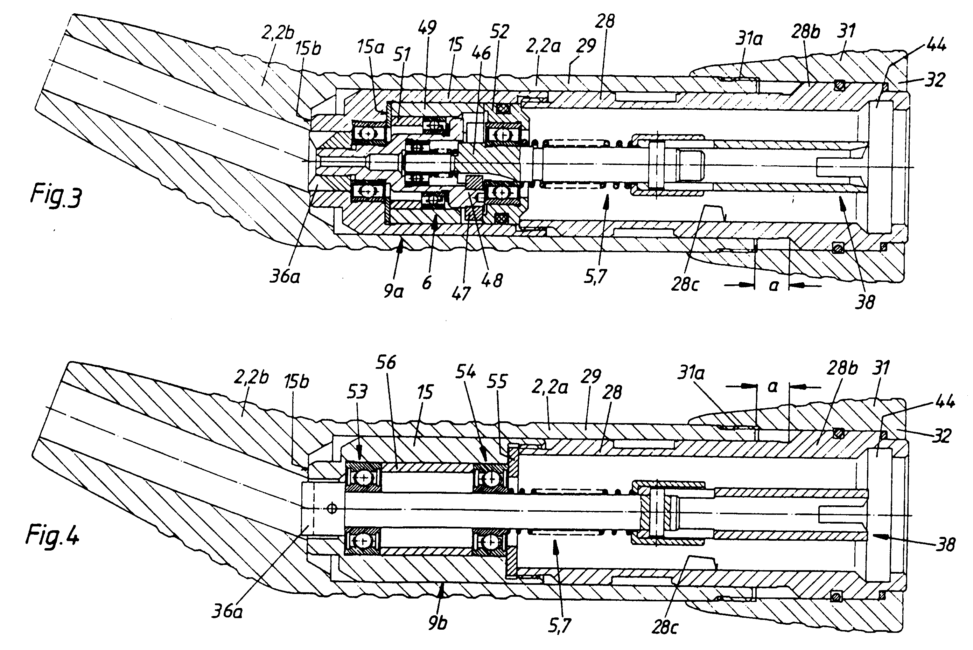

Beim Ausführungsbeispiel gemäß Fig. 3, bei dem gleiche oder vergleichbare Teile mit gleichen Bezugszeichen versehen sind, ist ein Getriebe 6 mit einer Untersetzung von 4:1 vorgesehen. Es handelt es um ein Planetengetriebe mit einem Sonnenzahnrad 46 und einem Planetenzahnrad 47, die die angegebene Untersetzung im Getriebe 6 erzeugen. Das Getriebe 6 weist zum vorbeschriebenen Getriebe 6 folgende wesentliche Unterschiede auf.

Der hintere Antriebswellenabschnitt 7 weist anstelle des schrägen Wellenabschnitts 12 zwischen den Wälzlagern 22 und 24 das Sonnenzahnrad 46 in Form einer Umfangsverzahnung auf, die beim vorliegenden Ausführungsbeispiel einstückig angeordnet ist, d.h., die Zähne sind in den Antriebswellenabschnitt 7 eingearbeitet. Das Ausgangszahnrad 14 weist anstelle einer Seitenverzahnung an seiner Rückseite einen exzentrischen, koaxialen Lagerzapfen 48, vorzugsweise einstückig, auf, auf dem das Planetenzahnrad 47 frei drehbar gelagert ist, und mit dem Sonnenzahnrad 46 kämmt. Desweiteren ist eine Lagerbuchse 49 im Getriebegehäuse 15 passend eingesetzt, in der das Wälzlager 16 gelagert und mittels einem Distanzring 51 axial gegen den hinteren Flansch des Ausgangszahnrads 14 axial von der Schulterfläche 15a distanziert ist. Anstelle einer topfförmigen Lagerbuchse ist bei diesem Ausführungsbeispiel als antriebsseitiges Endteil ein separater, vorzugsweise an seinem Umfang abgedichteter Lagerflansch 52 vorgesehen, der an der Lagerbuchse 49 anliegt und rückseitig durch das vordere Ende der Innenhülse 28 begrenzt ist. Auch bei diesem Ausführungsbeispiel kann das Getriebegehäuse 15 mittels der Innenhülse 28 zum einen gegen die Schulterfläche 15b gespannt werden und außerdem der Lagerflansch 52 rückseitig begrenzt werden.

Beim Ausführungsbeispiel nach Fig. 4, bei dem ebenfalls gleiche oder vergleiche Teile mit gleichen Bezugszeichen versehen sind, ist anstelle eines Getriebegehäuses eine Lagerhülse 15 vorhanden mit lediglich zwei einen axialen Abstand voneinander aufweisenden Wälzlagern 53, 54, in denen die Welle des Antriebswellenabschnitts 7 frei drehbar gelagert ist. Wie bereits vom Ausführungsbeispiel gemäß Fig. 3 ist auch hier das hintere Ende der Lagerhülse 15 auf das vordere Ende der Innenhülse 28 aufschraubbar, wobei zwischen dem vorderen Ende der Innenhülse 28 und der gegenüberliegenden Schulterfläche der Lagerhülse 15 eine Ringscheibe 55 eingeklemmt ist, deren innerer Randbereich das hintere Wälzlager 54 axial nach hinten begrenzt. Zwischen den Wälzlagern 53, 54 ist eine Distanzhülse 56 vorgesehen.

Die vorbeschriebenen Getriebe-Baueinheiten 9, 9a, 9b sind wahlweise in die Griffhülse 2 einbaubar.

Der zylindrische Ringansatz 28b auf dem hinteren Endbereich der Innenhülse 28 ist mit geringem Bewegungsspiel im hohlzylindrischen Schraubring 31 aufgenommen. Zwischen diesen beiden Teilen 28, 31 ist eine aus der dargetellten axialen Endstellung überdrückbare Haltevorrichtung 58 vorgesehen, vorzugsweise in Form eines radial vorgespannten, insbesondere runden Federringes 59, z.B. aus Metall, der in einer Ringnut 61 im einen Teil, hier im Ringansatz 28b, sitzt und elastisch gegen das andere Teil, hier den Schraubring 31, drückt. Vorzugsweise ist im anderen Teil, hier im Schraubring 31, eine kleine Rastnut 62 vorgesehen, so daß der Federring 59 auch in den Schraubring 31 geringfügig eintaucht und damit nicht nur kraftschlüssig sondern auch formschlüssig wirkt.

Durch relative Verschiebung der Teile 31, 28 wird der gespaltene Federring 59 zusammengedrückt, so daß z.B. der Schraubring 31 mit einer gewissen Axialkraft abgezogen werden kann. Zwischen dem Ringansatz 28b und der Schulter 32 kann ein elastisches Federelement 50 angeordnet sein, das die beiden Teile 28, 31 so gegeneinander verschiebt, daß der radial wirksame Federring 59 zwischen der linken Seitenfläche der Rastnut 62 und der rechten Seitenfläche der Ringnut 61 elastisch geklemmt wird und somit die beiden Teile 28, 31 axial spielfrei aneinander überdrückbar gehalten sind. Das Federelement 50 kann ein Ring aus elastischem Material oder ein Federring, insbesondere aus Metall wie vorzugsweise ein Wellring sein.

## Patentansprüche

1. Ärztliches oder zahnärztliches Behandlungsinstrument, insbesondere Handstück (1), mit einem angetriebenen Behandlungswerkzeug (4), wobei im Behandlungsinstrument eine Antriebsverbindung (6) mit einem Getriebe ausbaubar angeordnet ist, die in einer Lagerhülse (15) gelagert ist, die von hinten in das Behandlungsinstrument einschiebbar und in der eingeschobenen Stellung festlegbar ist, wobei eine Innenhülse (28) im Behandlungsinstrument (1) angeordnet ist, die von hinten in eine Außenhülse (29) des Behandlungsinstruments einschiebbar ist, und wobei zwischen dem hinteren Endbereich der Innenhülse (28) und der Außenhülse (29) des Behandlungsinstruments eine lösbare Verbindung (31a) vorgesehen ist,
dadurch gekennzeichnet,
daß zwischen der Innenhülse (28) und der Lagerhülse (15) eine lösbare Verbindung (15c) vorgesehen ist.

2. Behandlungsinstrument nach Anspruch 1,
dadurch gekennzeichnet,
daß die Außenhülse (29) eine rückseitig offene zylindrische Aufnahmebohrung (2c) aufweist und die Lagerhülse (15) und die Innenhülse (28) hohlzylindrische Teile mit gleichem Außendurchmesser sind.

3. Behandlungsinstrument nach Anspruch 1 oder 2,
dadurch gekennzeichnet,
daß die Außenhülse (29) eine Griffhülse (2) bildet, die vorzugsweise mit der Innenhülse (28) rückseitig auf einen Kupplungszapfen (41) eines Antriebsteils (42) aufsteckbar und lösbar verrastbar ist.

4. Behandlungsinstrument nach wenigstens einem der vorherigen Ansprüche,
dadurch gekennzeichnet,
daß die lösbare Verbindung (15c) zwischen der Innenhülse (28) und der Lagerhülse (15) durch eine Verschraubung mit Innen- und Außengewinde (15c, 28a) gebildet ist.

5. Behandlungsinstrument nach wenigstens einem der vorherigen Ansprüche,
dadurch gekennzeichnet,
daß die lösbare Verbindung (31a) zwischen der Innenhülse (28) und der Außenhülse (29) durch eine Verschraubung insbesondere eine Übergreifmutter (31) gebildet ist.

6. Behandlungsinstrument nach wenigstens einem der vorherigen Ansprüche,
dadurch gekennzeichnet,
daß unterschiedliche Lagerhülsen (15) oder mit einem Getriebe (6) unterschiedlicher Unter- oder Übersetzung ausgeführte Lagerhülsen (15) jeweils als Baueinheit (9, 9a, 9b) wahlweise einbaubar sind.

7. Behandlungsinstrument nach wenigstens einem der vorherigen Ansprüche,
dadurch gekennzeichnet, daß das Getriebe (6) ein Eingangszahnrad (11), einen festen Zahnkranz (13) und ein Ausgangszahnrad (14) aufweist, wobei das Ausgangszahnrad (14) werkzeugseitig vom Eingangszahnrad (11) angeordnet ist und das Eingangszahnrad (11) sowie das Ausgangszahnrad (14) einerseits sowie das Eingangszahnrad (11) und der feste Zahnkranz (13) andererseits miteinander kämmen, wobei das Eingangszahnrad (14) auf einem bezüglich der Mittelachse schrägen Lagerabschnitt (12) frei drehbar gelagert ist und somit im Betrieb des Getriebes (6) Taumelbewegungen ausführt, und wobei der feste Zahnkranz (13) mittels einem oder zu seinen beiden Seiten angeordneten hülsenförmigen Klemmteilen (16 25) axial klemmbar in der Lagerhülse (15) gelagert ist.

8. Behandlungsinstrument nach Anspruch 7,
dadurch gekennzeichnet,
daß das hintere Klemmteil (25) an seiner Rückseite von der Innenhülse (28) axial begrenzt ist, vorzugsweise mit der Innenhülse (28) gegen den festen Zahnkranz (13) spannbar ist.

9. Behandlungsinstrument nach wenigstens einem der Ansprüche 7 bis 8,
dadurch gekennzeichnet,
daß der feste Zahnkranz (13) bezüglich des Eingangszahnrades (11) werkzeugseitig angeordnet ist und auf seiner dem Behandlungswerkzeug (4) abgewandten Seite eine Seitenzahnung (13a) aufweist.

10. Behandlungsinstrument nach Anspruch 9,
dadurch gekennzeichnet,
daß der feste Zahnkranz (13) das Ausgangszahnrad (14) umgibt.

11. Behandlungsinstrument nach Anspruch 10,
dadurch gekennzeichnet,
daß die Seitenzahnungen (13a, 14a) des festen Zahnkranzes (13) und des Ausgangszahnrads (14) in ein und derselben Querebene bzw. Querrichtung angeordnet sind.

12. Behandlungsinstrument nach wenigstens einem der Ansprüche 7 bis 11,
dadurch gekennzeichnet,
daß das Eingangszahnrad (11) eine für die Seitenzahnungen (13a, 14a) des festen Zahnkranzes (13) und des Ausgangszahnrads (14) gemeinsame Seitenzahnung (11a) aufweist.

13. Behandlungsinstrument nach wenigstens einem der vorherigen Ansprüche,
dadurch gekennzeichnet,
daß das Getriebe (6) auf seiner dem Behandlungswerkzeug (4) abgewandten Seite eine Stirnwand (35; 52) aufweist.

14. Behandlungsinstrument nach wenigstens einem der Ansprüche 7 bis 13,
dadurch gekennzeichnet,
daß in der Lagerhülse (15) an der dem Behandlungswerkzeug (4) abgewandten Seite des festen Zahnkranzes (13) eine Innenbuchse (25) eingeschoben ist.

15. Behandlungsinstrument nach wenigstens einem der vorherigen Ansprüche,
dadurch gekennzeichnet,
daß es ein Winkelhandstück ist.

16. Behandlungsinstrument nach wenigstens einem der vorherigen Ansprüche,
dadurch gekennzeichnet,
daß das Ausgangszahnrad (14) an seiner dem Werkzeug (4) zugewandten Seite einen Antriebszapfen (18) mit einer Verzahnung (36a) für ein im Scheitelbereich des Winkelhandstücks vorgesehenes Winkelgetriebe (36c) aufweist.

17. Behandlungsinstrument nach wenigstens einem der vorherigen Ansprüche,
dadurch gekennzeichnet,
daß das Getriebe (6) mit einem Antriebswellenabschnitt (7) an seiner dem Behandlungswerkzeug (4) abgewandten Seite und mit oder ohne einem Antriebswellenabschnitt (8) an seiner dem Behandlungswerkzeug (4) zugewandten Seite eine austauschbare Baueinheit (9; 9a; 9b) ist.

18. Behandlungsinstrument nach wenigstens einem der vorherigen Ansprüche 5 bis 17,
dadurch gekennzeichnet,
daß die Innenhülse (28) und die Übergreifmutter (31) durch wenigstens ein Federelement, insbesondere einen Federring (59), gegen eine unbeabsichtigte relative Axialverschiebung gegeneinander gehalten sind, das in einer Ausnehmung (61) im einen Teil, insbesondere in der Innenhülse (28), sitzt und radial gegen das andere Teil, insbesondere den Schraubring (31), elastisch drückt, vorzugsweise in eine Rastausnehmung (62) im anderen Teil, insbesondere in der Übergreifmutter (31), axial überdrückbar einfaßt.

## Claims

1. Dental or medical treatment instrument, in particular tool holder (1), having a driven treatment tool (4), a drive connection (6) having a gearing being removably disposed in the treatment instrument and supported in a bearing bush (15), which is insertable from the rear into the treatment instrument and lockable in the inserted position, there being disposed in the treatment instrument (1) an inner sleeve (28) which is insertable from the rear into an outer sleeve (29) of the treatment instrument, and a releasable connection (31a) being provided between the rear end region of the inner sleeve (28) and the outer sleeve (29) of the treatment instrument,
characterized in
that a releasable connection (15c) is provided between the inner sleeve (28) and the bearing bush (15).

2. Treatment instrument according to claim 1,
characterized in
that the outer sleeve (29) has a cylindrical location hole (2c), which is open towards the rear, and the bearing bush (15) and the inner sleeve (28) are hollow cylindrical parts with an identical outside diameter.

3. Treatment instrument according to claim 1 or 2,
characterized in
that the outer sleeve (29) forms a gripping sleeve (2), which is preferably mountable with the inner sleeve (28) onto the rear end of a coupling pin (41) of a drive part (42) and releasably latchable thereon.

4. Treatment instrument according to at least one of the preceding claims,
characterized in
that the releasable connection (15c) between the inner sleeve (28) and the bearing bush (15) is formed by a threaded joint having an internal and an external thread (15c, 28a).

5. Treatment instrument according to at least one of the preceding claims,
characterized in
that the releasable connection (31a) between the inner sleeve (28) and the outer sleeve (29) is formed by a threaded joint, in particular a union nut (31).

6. Treatment instrument according to at least one of the preceding claims,
characterized in
that different bearing bushes (15) or bearing bushes (15) designed with different step-down or step-up gearing (6) are selectively mountable in each case as structural unit (9, 9a, 9b).

7. Treatment instrument according to at least one of the preceding claims,
characterized in
that the gearing (6) comprises an input gear wheel (11), a fixed ring gear (13) and an output gear wheel (14), wherein the output gear wheel (14) is disposed at the tool side of the input gear wheel (11) and the input gear wheel (11) and the output gear wheel (14), on the one hand, as well as the input gear wheel (11) and the fixed ring gear (13), on the other hand, mesh with one another, wherein the input gear wheel (14) is supported in a freely rotatable manner on an - in relation to the centre line - oblique bearing portion (12) and hence executes wobbling motions during operation of the gear (6), and wherein the fixed ring gear (13) is supported in the bearing bush (15) so as to be axially clampable by means of one sleeve-like clamping part or sleeve-like clamping parts (16, 25) disposed on either side thereof.

8. Treatment instrument according to claim 7,
characterized in
that the rear clamping part (25) is axially delimited at its rear side by the inner sleeve (28), preferably being braceable by the inner sleeve (28) against the fixed ring gear (13).

9. Treatment instrument according to at least one of claims 7 to 8,
characterized in
that the fixed ring gear (13) is disposed on the tool side of the input gear wheel (11) and at its side remote from the treatment tool (4) has a lateral toothing (13a).

10. Treatment instrument according to claim 9,
characterized in
that the fixed ring gear (13) surrounds the output gear wheel (14).

11. Treatment instrument according to claim 10,
characterized in
that the lateral toothings (13a, 14a) of the fixed ring gear (13) and of the output gear wheel (14) are disposed in one and the same transverse plane or transverse direction.

12. Treatment instrument according to at least one of claims 7 to 11,
characterized in
that the input gear wheel (11) has a common lateral toothing (11a) for the lateral toothings (13a, 14a) of the fixed ring gear (13) and the output gear wheel (14).

13. Treatment instrument according to at least one of the preceding claims,
characterized in
that the gearing (6) at its side remote from the treatment tool (4) has an end wall (35; 52).

14. Treatment instrument according to at least one of claims 7 to 13,
characterized in
that an inner bush (25) is inserted into the bearing bush (15) at the side of the fixed ring gear (13) remote from the treatment tool (4).

15. Treatment instrument according to at least one of the preceding claims,
characterized in
that it is an angular tool holder.

16. Treatment instrument according to at least one of the preceding claims,
characterized in
that the output gear wheel (14) at its side directed towards the tool (4) comprises a drive pin (18) with gear teeth (36a) for an angular gear (36c) provided in the angle point region of the angular tool holder.

17. Treatment instrument according to at least one of the preceding claims,
characterized in
that the gearing (6) with a drive shaft portion (7) at its side remote from the treatment tool (4) and with or without a drive shaft portion (8) at its side directed towards the treatment tool (4) is an exchangeable structural unit (9; 9a; 9b).

18. Treatment instrument according to at least one of the preceding claims 5 to 17,
characterized in
that the inner sleeve (28) and the union nut (31) are locked against unintentional axial displacement relative to one another by at least one spring element, in particular a spring washer (59), which is seated in a recess (61) in the one part, in particular in the inner sleeve (28), and presses elastically in a radial direction against the other part, in particular the ring nut (31), preferably being fitted in an axially pressurizable manner into a detent recess (62) in the other part, in particular in the union nut (31).

## Revendications

1. Instrument de traitement médical ou dentaire, notamment pièce à main (1), comportant un outil de traitement (4) entraîné, un mécanisme d'entraînement (6) avec un réducteur étant disposé de manière démontable à l'intérieur de l'instrument de traitement, lequel mécanisme d'entraînement est monté dans un manchon de support (15) qui peut être introduit par l'arrière dans l'instrument de traitement et bloqué dans la position de montage à l'intérieur de celui-ci, un manchon intérieur (28) qui peut être introduit par l'arrière dans un manchon extérieur (29) de l'instrument de traitement (1) étant disposé dans ledit instrument de traitement et une liaison (31a) séparable étant prévue entre la partie d'extrémité arrière du manchon intérieur (28) et le manchon extérieur (29) de l'instrument de traitement, caractérisé par le fait que qu'une liaison séparable (15c) est prévue entre le manchon intérieur (28) et le manchon de support (15).

2. Instrument de traitement selon la revendication 1, caractérisé par le fait que le manchon extérieur (29) comporte un alésage (2c) cylindrique ouvert vers l'arrière et que le manchon de support (15) et le manchon intérieur (28) sont des pièces cylindriques creuses ayant même diamètre extérieur.

3. Instrument de traitement selon la revendication 1 ou 2, caractérisé par le fait que le manchon extérieur (29) est un manchon formant poignée (2) qui, de préférence avec le manchon intérieur (28), peut être enfiché et encliqueté de manière séparable, côté arrière, sur un tronçon d'accouplement (41) d'un élément d'entraînement (42).

4. Instrument de traitement selon au moins une des revendications précédentes, caractérisé par le fait que la liaison (15c) séparable entre le manchon intérieur (28) et le manchon de support (15) est formée par un assemblage vissé avec un filetage intérieur et un filetage extérieur(15c, 28a).

5. Instrument de traitement selon au moins une des revendications précédentes, caractérisé par le fait que la liaison (31a) séparable entre le manchon intérieur (28) et le manchon extérieur (29) est formée par un assemblage vissé, notamment par un écrou de raccordement (31).

6. Instrument de traitement selon au moins une des revendications précédentes, caractérisé par le fait que des manchons de support (15) différents ou des manchons de support (15) avec différents rapports de démultiplication peuvent être montés de manière sélective en tant qu'ensemble de construction (9, 9a, 9b).

7. Instrument de traitement selon au moins une des revendications précédentes, caractérisé par le fait que le réducteur (6) comporte un pignon d'entrée (11), une couronne dentée (13) fixe et un pignon de sortie (14), le pignon de sortie (14) étant disposé côté outil par rapport au pignon d'entrée (11), le pignon d'entrée (11) et le pignon de sortie (14) d'une part et la couronne dentée (13) fixe d'autre part engrenant l'un avec l'autre, le pignon d'entrée (14) étant monté libre en rotation sur un tronçon formant palier (12), incliné par rapport à l'axe médian, et exécutant ainsi un mouvement de nutation lors du fonctionnement du réducteur et la couronne dentée (13) fixe étant immobilisée axialement dans le manchon de support (15) à l'aide d'un élément de blocage (16, 25) en forme de douille disposé d'un côté ou des deux côtés.

8. Instrument de traitement selon la revendication 7, caractérisé par le fait que l'élément de blocage (25) postérieur, au niveau de sa face arrière, est limité axialement par le manchon intérieur (28), et de préférence peut être serré à l'aide du manchon intérieur (28) contre la couronne dentée (13) fixe.

9. Instrument de traitement selon au moins une des revendications 7 à 8, caractérisé par le fait que la couronne dentée fixe (13) est montée côté outil par rapport au pignon d'entrée (11) et présente une denture latérale (13a) sur sa face éloignée de l'outil de traitement (4).

10. Instrument de traitement selon la revendication 9, caractérisé par le fait que la couronne dentée (13) fixe entoure le pignon de sortie (14).

11. Instrument de traitement selon la revendication 10, caractérisé par le fait que les dentures latérales (13a, 14a) de la couronne dentée (13) fixe sont disposées dans un même plan transversal ou dans une même direction transversale.

12. Instrument de traitement selon au moins une des revendications 7 à 1, caractérisé par le fait que le pignon d'entrée (11) comporte une denture latérale (11a) commune pour les dentures latérales (13a, 14a) de la couronne dentée (13) fixe.

13. Instrument de traitement selon au moins une des revendications précédentes, caractérisé par le fait que le réducteur (6) comporte une paroi frontale (35, 52) sur son côté éloigné de l'outil de traitement (4).

14. Instrument de traitement selon au moins une des revendications 7 à 13, caractérisé par le fait qu'une douille intérieure (25) est insérée dans le manchon de support (15), du côté de la couronne dentée (13) fixe éloigné de l'outil de traitement (4).

15. Instrument de traitement selon au moins une des revendications précédentes, caractérisé par le fait que l'instrument de traitement est un contrangle.

16. Instrument de traitement selon au moins une des revendications précédentes, caractérisé par le fait que le pignon de sortie (14) sur sa face tournée vers l'outil (4) comporte un bout d'arbre d'entraînement (18) avec une denture (36a) pour un renvoi d'angle (36c) prévu dans la région du sommet du contrangle.

17. Instrument de traitement selon au moins une des revendications précédentes, caractérisé par le fait que le réducteur (6) est un ensemble de construction (9, 9a, 9b) avec un bout d'arbre d'entrée (7) sur son côté opposé à l'outil de traitement (4) et un bout d'arbre de sortie (8) sur son côté tourné vers l'outil de traitement (4).

18. Instrument de traitement selon au moins une des revendications précédentes 5 à 17, caractérisé par le fait que le manchon intérieur (28) et l'écrou d'accouplement (31) sont retenus l'un par rapport à l'autre de façon à empêcher un déplacement axial relatif par l'intermédiaire d'au moins un élément élastique, notamment par l'intermédiaire d'un anneau élastique (59) qui est monté dans un évidement (61) dans un élément, notamment dans le manchon intérieur (28), et vient en appui élastique radialement contre l'autre élément, notamment dans la bague vissée (31), de préférence se loge de manière compressible dans un évidement d'encliquetage (62) dans l'autre élément, notamment dans l'écrou d'accouplement (31).
